# EUROPEAN PATENT SPECIFICATION

(11) **EP 0 729 598 B1**
(45) Date of publication and mention of the grant of the patent: **28.04.1999**
(21) Application number: 95901222.0
(22) Date of filing: 15.11.1994
(51) Int. Cl.: G02F 1/1335, G02B 6/08

(54) **OPTICAL ELEMENT FOR USE IN AN ARRAY OF OPTICAL ELEMENTS IN A DISPLAY ARRANGEMENT**
OPTISCHES ELEMENT ZUR VERWENDUNG IN EINER MATRIX OPTISCHER ELEMENTE IN EINER ANZEIGEVORRICHTUNG
ELEMENT OPTIQUE CONSTITUANT D'UN RESEAU D'ELEMENTS OPTIQUES DANS UN AGENCEMENT D'AFFICHAGE

(30) Priority: 15.11.1993 US 152604
(43) Date of publication of application: 04.09.1996
(73) Proprietor: AlliedSignal Inc., Morristown, New Jersey 07962-2245 (US)
(72) Inventor: BEESON, Karl, W., Princeton, NJ 08540 (US); ZIMMERMAN, Scott, M., Basking Ridge, NJ 07920 (US); FERM, Paul, M., Morristown, NJ 07960 (US); KONICEK,Jiri,Daniel, Onaalaska, WI 54650 (US); SCHWEYEN,John,Charles, Midland Park, NJ 07432 (US)
(74) Representative: Brunner, Michael John
(86) International application number: US9412999
(87) International publication number: WO9514256

(56) References cited:
- EP-A- 0 518 362
- EP-A- 0 525 755
- WO-A-95/01584
- US-A- 4 735 495

## Description

Viewing screen arrangements such as direct, front, dead front and back light viewing screen arrangements use an array including sequentially adjacent optical elements. Array arrangements of this type are described and claimed in US Application Serial Number 088,414 filed on July 1, 1993.

The optical elements must have particular geometric characteristics to provide desired viewing screen parameters including contrast between output and reflected ambient light; a desirable fraction at input light which exits the elements as output light (THROUGHPUT); and a desired angular distribution of output light (SIGMA). To this extent the micro-optic elements are generally configured as truncated symmetric substantially trapezoidal solids having a light input surface and a light output surface, and sides tapering inwardly from the light input surface to the light output surface.

An example of such elements is shown in EP-A-0 525 755 over which the present invention is characterised. Further prior art corresponding to the preamble of claim 1 is disclosed in European application EP-A-518 362.

Further, the aforementioned contrast, THROUGHPUT and SIGMA characteristics have been found to vary as a function of the ratio of the light output area to the light input area CARAT) and the angle (θ) from the centreline of the solid structure at which the sides of the solid structure taper inwardly.

Accordingly, it is an abject of this invention to provide an optical element having optimum geometric characteristics in accordance with the above.

According to the present invention there is provided an array of optical elements for use in a display, each element comprising a longitudinally symmetrical solid structure including a light input end surface and a light output end surface, the light input and light output end surfaces having different areas, and each element being characterised in that
the ratio of the light output surface area to the light input surface area is between approximately 0.1 and approximately 0.3, and by
sides tapering inwardly from the light input surface to the light output surface at an angle between approximately 7.5 degrees and approximately 17.5 degrees to the longitudinal axis of the structure.

The contrast between light exiting the optical element and light reflected from the array varies as a function of said ratio (ARAT). The fraction (THROUGHPUT) of the entering light which exits the optical element, and the angular distribution (SIGMA) of the exiting light vary as a function of said ratio (ARAT) and said angle (θ).

Figures 1 - 6 are diagrammatic representations illustrating the geometrical characteristics of an optical element configured according to the invention.

Figures 7 - 8 are diagrammatic representations illustrating the relationship between viewing angle and intensity.

Figure 9 is a graphical representation illustrating the variation of THROUGHPUT with the ratio (ARAT) and the angle (θ).

Figure 10 is a graphical representation illustrating the variation of SIGMA with said ratio (ARAT) and said angle (θ).

### DETAILED DESCRIPTION OF THE INVENTION

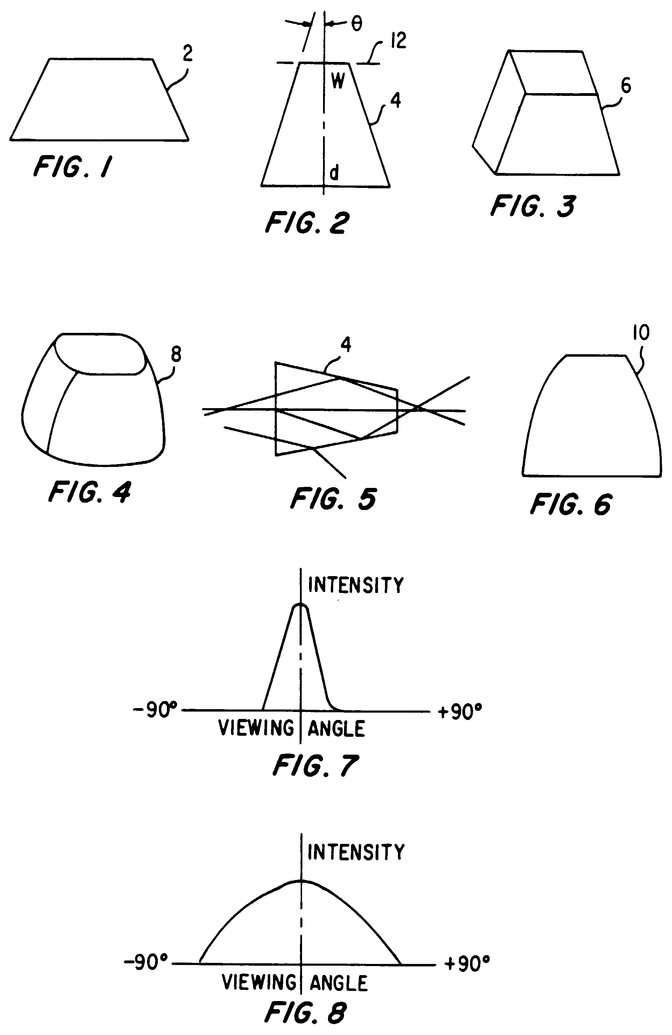

This invention discloses three-dimensional optical elements based on symmetric trapezoidal (or nearly trapezoidal) geometries such as may be used in arrays of such elements. The basic planar trapezoidal configuration is designated by the numeral 2 as shown in Figure 1. Numerous three dimensional solid shapes can be constructed from such a planar configuration. One specific example is a right angle conical segment designated as 4 in Figure 2 obtained by rotating trapezoid 2 of Figure 1 about an axis which bisects line segments d and w. Other configurations include a right symmetric pyramid 6 as illustrated in Figure 3. In practice it is possible to create a rounded right symmetric pyramidal structure 8 such as shown in Figure 4. The sides of the structures may be straight as shown in Figures 2 - 4, or curved as in structure 10 shown in Figure 6.

These configurations are defined in terms of two parameters: (1) an angle θ from the centerline of the structure and (2) a parameter defined as the square of the ratio of dimension d to dimension W, i.e. d²/w², as shown in Figure 2 and referred to as ARAT.

This invention is directed to the optical properties of three dimensional optical elements derived from the basic symmetrical configurations as described above. The optical elements are characterized by a refractive index nₒ and are generally placed within a medium of lower refractive index nₘ. Typically, the refractive index of the element may be nₒ = 1.3 - 1.7 with a particularly convenient value for nₒ being 1.5. The surrounding medium could be air for which nₘ = 1, or it could be some other material with a refractive index nₘ < nₒ, preferably nₒ - nₘ > 0.1.

According to principles of light ray optics, a ray of light within an optical element such as illustrated in Figures 1 - 4 which encounters the interface with the surrounding medium can either reflect from a surface through the phenomenon of total internal reflection if the incident angle relative to a line normal to the surface exceeds the critical angle θₒ = arcsin(nₒ/nₘ), or a ray can refract and enter the surrounding medium if the incident angle is less than the critical angle. A ray of light which enters the base of such an element at some angle to the central axis may encounter the boundary many times. Three things may happen to the ray: (1) it may be refracted out of the element; (2) it may exit from the top of the element (possibly at a different angle from the incident angle) or it may be retroreflected and exit from the base. In this regard, reference is made to Figure 5, wherein structure 4 is shown for purposes of example. Such optical characteristics of truncated conical and pyramidal optical elements are well-known to those skilled in the art and will not be herein further described.

This invention is concerned with the properties of arrays of truncated symmetrical solid conical and pyramidal elements as described in transforming the angular distribution of a light beam. In particular, the invention is directed to the transformation of approximately collimated light to light distributed over a wide range of angles through total internal reflection. In this regard, a light-absorbing (black) element 12 may be disposed to surround the top portions of the optical elements such as illustrated in Figure 2. This presents a viewing area of the array which is light absorbing over the area not covered by the exit regions of the individual optical elements. This configuration provides for high contrast by providing for a nonreflective surface and in this regard, reference is made to the aforementioned co-pending U.S. Application Serial Number 086,414.

For many applications, the specific optical properties of importance are: (1) THROUGHPUT (or transmission); (2) angular distribution; and optionally (3) contrast. For illustrative purposes, these properties will be described quantitatively below.

THROUGHPUT is the fraction of optical rays incident upon the base of the optical element which exits from the top surface.

Viewing angle index (SIGMA) is a measure of angular distribution of light ray flux (number of rays per solid angle) and for quantitative purposes will be defined here as the root mean square value of sin ψ where ψ is the viewing angle measured from the central axis of the structure along a suitable axis. Viewing angle index is thus a number between 0 and 1. A viewing angle index of o corresponds to perfect collimation. The viewing angle index for a lambertian emitter radiating into a hemisphere is 0.5. For purposes of illustration, the viewing angle along the direction of the plane for the defining basic planar trapezoidal configuration has been examined.

Contrast is simply the difference between the bottom and top surfaces areas of the optical element relative to the bottom surface area and is thus equal to the quantity (1 - ARAT).

Some general optical characteristics of optical structures such as described have been recognized by the prior art. However, it has been found that for optical elements derived from shapes characterized by certain specific values of the parameters (ARAT) and (θ), arrays can be constructed which exhibit a surprising degree of THROUGHPUT, viewing angle index, and (optionally) contrast. It has further been found that arrays of such elements are useful for incorporation into various kinds of optical viewing screens including liquid crystal displays and projection displays.

In order to exemplify the features of the invention, a symmetric pyramidal optical element derived from a trapezoidal shape characterized by refractive index nₒ = 1.5 in air (nₘ = 1.0) has been considered. Optical rays incident upon the base of the element with random input position across the base and with input directions characterized by a uniform angular distribution over ± 10° (in air) are taken into account.

Using a computer program as can be developed by those skilled in the computer programming arts, for 10,000 rays the average THROUGHPUT, viewing angle index and contrast as a function of the geometrical parameters ARAT and e can be determined. The product of THROUGHPUT, viewing angle index and contrast is then determined. This quantity, maximized at a value of about 0.35 for θ = 15° and ARAT = 0.18, exhibits a particular combination of contrast, viewing angle index and THROUGHPUT. No other maximum was found.

The computed product maintained about 75% of its maximum value for 7.5° ≤ θ ≤ 17.5° and for 0.1 ± ARATs ≤ 0.28. For e and ARAT outside of this range, the product was smaller. For θ = 13° and ARAT = 0.16 the computed optical characteristics were contrast = 0.84, THROUGHPUT = 0.83 and viewing angle index = 0.46. Such a combination of values is within ranges suitable for use in a liquid crystal display.

The above example illustrates that only for certain geometries can an array of truncated symmetrical solid optical structures simultaneously yield THROUGHPUT, viewing angle and contrast sufficient for viewing screen applications as is the purpose of the invention.

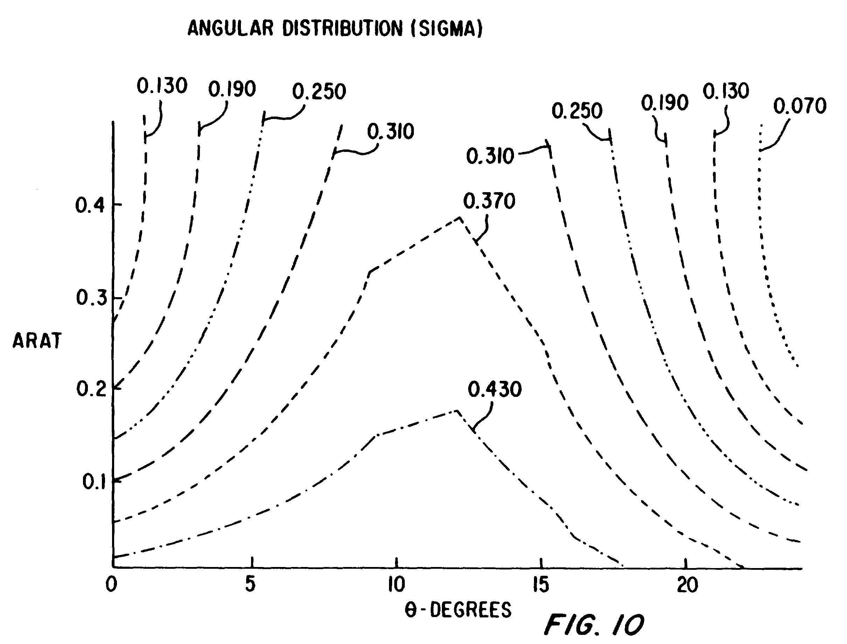

The features of the invention are graphically illustrated in Figures 7 - 10.

Figures 7 and 8 show a plot of viewing angle and intensity for a small angular distribution of light exiting an optical element of the type described (Figure 7) and for a large angular distribution of exiting light (Figure 8).

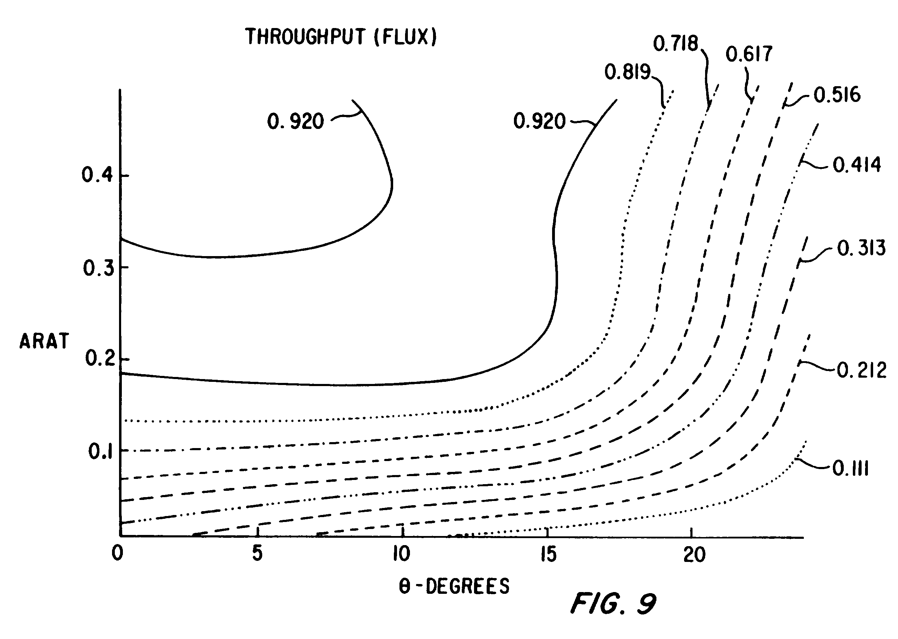

Figure 9 shows a plot of THROUGHPUT for various ARATs and angles e, and Figure 11 shows a plot of angular distribution of light for various ARATs and angles θ.

With the above description of the invention in mind, reference is made to the claims appended hereto for a definition of the scope of the invention.

## Claims

1. An array of optical elements for use in a display, each element comprising a longitudinally symmetrical solid structure (4) including a light input end surface and a light output end surface, the light input and light output end surfaces having different areas, and each element being characterised in that
the ratio of the light output surface area to the light input surface area is between approximately 0.1 and approximately 0.3, and by
sides tapering inwardly from the light input surface to the light output surface at an angle between approximately 7.5 degrees and approximately 17.5 degrees to the longitudinal axis of the structure.

2. An array according to claim 1, wherein the solid structure (4) has a rectangular cross-section.

3. An array according to claim 1, wherein the solid structure (4) has a circular cross-section.

4. An array according to any of claims 1 to 3, wherein the solid structure (4) has straight sides.

5. An array according to any of claims 1 to 3, wherein the solid structure (4) has curved sides.

6. An array according to claim 4, wherein the solid structure (4) is a right symmetric pyramid.

7. An array according to claim 5, wherein the solid structure (4) is a right angle conical segment.

8. An array according to any of claims 1 to 7, wherein each solid structure has a refractive index between approximately 1.4 and approximately 1.75.

## Patentansprüche

1. Array aus optischen Elementen zur Verwendung in einem Display, wobei jedes Element eine längssymmetrische massive Struktur (4) mit einer Lichteintrittsstirnfläche und einer Lichtaustrittsstirnfläche aufweist, wobei die Lichteintritts- und die Lichtaustrittsstirnfläche unterschiedlich groß sind und jedes Element dadurch gekennzeichnet ist, daß
das Verhältnis aus Lichtaustrittsflächeninhalt und Lichteintrittsflächeninhalt zwischen etwa 0,1 und etwa 0,3 liegt, und durch
Seiten, die sich von der Lichteintrittsfläche zu der Lichtaustrittsfläche unter einem Winkel von zwischen etwa 7,5 Grad und etwa 17,5 Grad zur Längsachse der Struktur nach innen verjüngen.

2. Array nach Anspruch 1, bei dem die massive Struktur (4) einen rechtwinkligen Querschnitt aufweist.

3. Array nach Anspruch 1, bei dem die massive Struktur (4) einen kreisförmigen Querschnitt aufweist.

4. Array nach einem der Ansprüche 1 bis 3, bei dem die massive Struktur (4) gerade Seiten aufweist.

5. Array nach einem der Ansprüche 1 bis 3, bei dem die massive Struktur (4) gekrümmte Seiten aufweist.

6. Array nach Anspruch 4, bei dem die massive Struktur (4) eine rechtwinklige symmetrische Pyramide ist.

7. Array nach Anspruch 5, bei dem die massive Struktur (4) ein rechtwinkliges konisches Segment ist.

8. Array nach einem der Ansprüche 1 bis 7, bei dem jede massive Struktur einen Brechungsindex zwischen etwa 1,4 und etwa 1,75 aufweist.

## Revendications

1. Réseau d'éléments optiques à utiliser dans un affichage, chaque élément comprenant une structure solide longitudinalement symétrique (4) comportant une surface d'extrémité d'entrée de lumière et une surface d'extrémité de sortie de lumière, les surfaces d'extrémité d'entrée de lumière et de sortie de lumière ayant des aires différentes, et chaque élément étant caractérisé en ce que
le rapport de l'aire de la surface de sortie de lumière à l'aire de la surface d'entrée de lumière est compris entre environ 0,1 et environ 0,3 et par
des côtés s'effilant vers l'intérieur depuis la surface d'entrée de lumière vers la surface de sortie de lumière suivant un angle compris entre environ 7,5 degrés et environ 17,5 degrés par rapport à l'axe longitudinal de la structure.

2. Réseau suivant la revendication 1, dans lequel la structure solide (4) a une section transversale rectangulaire.

3. Réseau suivant la revendication 1, dans lequel la structure solide (4) a une section transversale circulaire.

4. Réseau suivant l'une quelconque des revendications 1 à 3, dans lequel la structure solide (4) a des côtés droits.

5. Réseau suivant l'une quelconque des revendications 1 à 3, dans lequel la structure solide (4) a des côtés courbes.

6. Réseau suivant la revendication 4, dans lequel la structure solide (4) est une pyramide symétrique droite.

7. Réseau suivant la revendication 5, dans lequel la structure solide (4) est un segment conique à angle droit.

8. Réseau suivant l'une quelconque des revendications 1 à 7, dans lequel chaque structure solide a un indice de réfraction compris entre environ 1,4 et environ 1,75.
